# EUROPEAN PATENT APPLICATION

(11) **EP 4 767 812 A1**
(43) Date of publication of application: **01.07.2026**
(21) Application number: 25807130.7
(22) Date of filing: 19.05.2025
(51) Int. Cl.: A01D 69/02, A01D 69/06, A01D 69/08

(54) **SELF-PROPELLED DEVICE AND GARDEN TOOL**

(30) Priority: 20.05.2024 CN 202421103045 U
(71) Applicant: Zhejiang Yat Electrical Appliance Co., Ltd., Jiaxing, Zhejiang 314051 (CN)
(72) Inventor: LU, Maolong, Jiaxing, Zhejiang 314051 (CN); ZHOU, Huan, Jiaxing, Zhejiang 314051 (CN); XU, Xianfu, Jiaxing, Zhejiang 314051 (CN)
(74) Representative: karo IP
(86) International application number: PCT/CN2025/095684
(87) International publication number: WO 2025/242030

(57) **Abstract**

Disclosed are a self-propelled apparatus and a lawn and garden implement, which relate to the field of self-propelled apparatuses. The disclosure addresses two drawbacks of conventional self-propelled apparatuses: lack of differential functionality and incapability of precisely positioning the idler clutch assembly in the disengaged state. A technical solution for overcoming the drawbacks includes a housing, an electric motor and a transmission mechanism disposed in the housing; the transmission mechanism includes a driving gear, a driven gear, and an idler clutch assembly; the technical solution further includes a guiding mechanism and a differential mechanism; the guiding mechanism includes a first guiding member and a second guiding member; the differential mechanism includes a left axle shaft with a differential left gear mounted thereon, a right axle shaft, and a positioning sleeve supporting and aligning the axle shafts; two differential planetary gears are rotatably mounted within the positioning sleeve and mesh with both differential gears. The disclosure achieves a smoother and more stable turning performance of the self-propelled apparatus; cooperation between the sensor and the trigger member ensures precise positioning of the idler clutch assembly in the disengaged position.

## Description

### FIELD

The present disclosure relates to self-propelled apparatuses, and more particularly relates to a self-propelled apparatus and a law and garden implement incorporating the same.

### BACKGROUND

Currently, lawn and garden implements, including lawn mowers, rakers, and snow blowers, are generally heavy and cumbersome. A self-propelled apparatus is typically incorporated in such an implement, for example a lawn mower, to reduce operator fatigue in manually pushing the same. A conventional self-propelled apparatus generally has a complex clutch mechanism; when the implement is pushed faster than the speed provided by a drive motor in the self-propelled apparatus, the drive motor would be back-driven, causing excessive wear of critical components. In addition, some existing self-propelled apparatuses used in the lawn and garden implements leverage an automatic clutch that typically requires a control component such as a shift fork; should the control component fail, the automatic clutch would also fail, resulting in compromised reliability.

Chinese Patent Application No. CN116171738A discloses a self-propelled apparatus for a lawn and garden implement and a lawn and garden machinery incorporating the same; the clutch functionality of the self-propelled apparatus is realized via an idler clutch assembly and an elastic member. However, owing to the elastic member's shorter service life, the apparatus cannot ensure stable positioning and guidance; and due to lack of differential capability, its practicality can hardly satisfy market requirements.

### SUMMARY

To overcome the drawbacks of conventional self-propelled apparatuses, specifically, lack of differential functionality and incapability of reliably positioning an idler clutch assembly in the disengaged state, the present disclosure provides a self-propelled apparatus and a lawn and garden implement incorporating the same; the self-propelled apparatus is provided with a differential mechanism that enables differential rotation between a left axle shaft and a right axle shaft, ensuring smoother and more reliable steering performance; additionally, cooperative interaction between a trigger member and a sensor achieves precise and reliable positioning of the idler clutch assembly in the disengaged state.

The present disclosure adopts a technical solution below:
A self-propelled apparatus, comprising a housing; an electric motor, and a transmission mechanism driven by the electric motor, the electric motor and the transmission mechanism being disposed in the housing, the transmission mechanism comprising a driving gear, a driven gear, and an idler clutch assembly, the idler clutch assembly being in mesh with the driving gear and movable to engage with the driven gear; wherein the self-propelled apparatus further comprises a guiding mechanism and a differential mechanism; the guiding mechanism comprises a first guiding member mounted on the housing and a second guiding member mounted on the idler clutch assembly, the second guiding member rotating synchronously with the idler clutch assembly and being configured to move along the first guiding member to facilitate engagement and disengagement of the idler clutch assembly with the driven gear, and the differential mechanism comprises a left axle shaft, a right axle shaft, and a positioning sleeve, the left axle shaft and the right axle shaft being coaxially aligned, the positioning sleeve being locked onto the driven gear, the driven gear being mounted on the right axle shaft, a differential right gear being further mounted on the right axle shaft, a differential left gear being mounted on the left axle shaft, the positioning sleeve being configured to support and align the right axle shaft and the left axle shaft, two differential planetary gears being rotatably disposed within the positioning sleeve and respectively meshing with both the differential left gear and the differential right gear.

The present disclosure offers the following benefits:
In this embodiment, the differential mechanism comprises the left axle shaft, the right axle shaft, and the positioning sleeve; the differential left gear is provided on the left axle shaft, and the differential right gear is provided on the right axle shaft; the positioning sleeve rotates synchronously with the driven gear; two differential planetary gears are disposed within the positioning sleeve, each differential planetary gear simultaneously meshing with both the differential left gear and the differential right gear; when the idler clutch assembly meshes with the driven gear, the idler clutch assembly transmits power to the driven gear, causing the driven gear to rotate to drive rotation of the positioning sleeve; as the positioning sleeve rotates, the two differential planetary gears drive the differential left gear and the differential right gear to rotate, thereby enabling rotation of the left axle shaft and the right axle shaft. When the implement moves linearly forward, the forces acting on both left and right axle shafts are equal; the differential left gear and the differential right gear rotate together with the positioning sleeve but do not rotate about their own axes; consequently, the differential left gear, the differential right gear, and the differential planetary gears rotate at a same speed as the driven gear, transmitting power to the left axle shaft and the right axle shaft, causing the left and right axle shafts to rotate synchronously at the same speed. When the implement turns, the angular velocities and resistances of the left and right axle shafts differ, where the resistance of the axle shaft on the inner side (i.e., whichever of the left axle shaft or right axle shaft is positioned on the inner side of the turn) is greater than that of the axle shaft on the outer side (i.e., whichever of the left axle shaft or right axle shaft is positioned on the outer side of the turn); now, the differential planetary gears not only rotate with the driven gear and the positioning sleeve but also rotate about their own axes; for example, when the implement turns left, power from the differential left gear at the inner side is distributed to the outer differential right gear via rotation of the differential planetary gears about their own axes; the differential planetary gears drive the differential right gear on the outer side to rotate at a higher speed than the differential left gear on the inner side, resulting in the rotational speed of the right axle shaft being greater than that of the left axle shaft, thereby achieving differential travel. The differential mechanism effectively avoids slippage and accelerated wear of the wheel driven by the draft shaft on the inner side during turning while significantly enhancing user experience.

In some embodiments, the first guiding member has a curved configuration and comprises a toothed portion on one side thereof, the toothed portion being in meshing engagement with the second guiding member. With this technical solution, the first guiding member guides movement of the idler clutch assembly through gear meshing engagement with the second guiding member. This configuration increases the engagement force between the first and second guiding members, enabling the idler clutch assembly to overcome resistance to move, thereby effectively enhancing the reliability of the idler clutch assembly.

In some embodiments, the first guiding member is rotatably mounted on an inner side of the housing, and an elastic member is disposed in the housing on a side of the first guiding member facing away from the second guiding member, the elastic member being configured to bias the first guiding member toward the second guiding member.

In some embodiments, the first guiding member comprises a pivot end pivoted to the housing and a free end distal from the pivot end, a stop block is provided in the housing to limit a rotation angle of the first guiding member, and the elastic member biases the first guiding member such that the free end of the first guiding member abuts against the stop block. With this technical solution, the stop block not only can limit the rotation angle of the first guiding member but also can distribute the acting force exerted by the first guiding member on the second guiding member, preventing jamming induced by interference of the first guiding member with rotation of the second guiding member; this configuration also ensures reliable engagement between the second guiding member and the first guiding member and thereby enhances operational reliability of the idler clutch assembly.

In some embodiments, the toothed portion of the first guiding member comprises a transition segment and a disengagement segment arranged continuously, a tooth protrusion height of the disengagement segment being less than that of the transition segment, the disengagement segment being positioned proximal to the free end, and during engagement or disengagement of the idler clutch assembly with the driven gear, the second guiding member contacts the disengagement segment while traversing the transition segment of the toothed portion toward the free end or the pivot end, respectively. With this technical solution, despite the shorter protrusion height on the disengagement segment, the tooth feature remains capable of engaging with the second guiding member to provide force sufficient for movement toward the engaged position, overcoming sliding resistance of the idler clutch assembly, ensuring smooth operation, and enhancing reliability.

In some embodiments, a clearance recess is provided on a side of the first guiding member facing the second guiding member, and when the idler clutch assembly is engaged with the driven gear, a clearance is maintained between the second guiding member and the clearance recess. With this technical solution, provision of the clearance recess enables a non-contact state between the first guiding member and the second guiding member in the engaged state, minimizing contact-induced wear between the first guiding member and the second guiding member.

In some embodiments, an intermediate shaft is provided between the left axle shaft and the right axle shaft, the left axle shaft and the right axle shaft being connected via the intermediate shaft to position the left axle shaft and the right axle shaft in coaxial alignment.

In some embodiments, the left axle shaft and the right axle shaft are each connected to a wheel, a cylindrical pin is provided on each of the left axle shaft and the right axle shaft, each wheel is provided with a ratchet wheel having ratchet teeth, and each cylindrical pin drivingly engages with the corresponding ratchet teeth to effect unidirectional drive. With this technical solution, unidirectional transmission is established between each of the left and right axle shafts and the respective wheels connected thereto, which can prevent reverse torque transmission, such that when the forward speed of the wheels is greater than the motor-driven speed under an external force, relative rotation occurs between the axle shafts and the respective wheels connected thereto; this mechanism prevents the external force from being transmitted in reverse to the electric motor, thereby providing a protective role for the electric motor and contributing to an extended service life.

In some embodiments, the left axle shaft and the right axle shaft are each drivingly coupled to a respective wheel via a respective overrunning clutch to effect unidirectional torque transmission.

The present disclosure further describes a self-propelled apparatus, comprising: a housing; an electric motor disposed in the housing; a transmission mechanism driven by the electric motor and disposed in the housing, the transmission mechanism comprising a driving gear, a driven gear, and an idler clutch assembly, the idler clutch assembly being in mesh with the driving gear and movable to engage with the driven gear; wherein the self-propelled apparatus further comprises a guiding mechanism comprising a first guiding member mounted on the housing and a second guiding member mounted on the idler clutch assembly, the second guiding member rotating synchronously with the idler clutch assembly and being configured to travel along the first guiding member to facilitate engagement and disengagement of the idler clutch assembly with the driven gear, and wherein the idler clutch assembly comprises an idler gear and an idler shaft fixedly connected to each other, the idler gear being configured to assume an engaged state in which it meshes with the driven gear and a disengaged state in which it is separated from the driven gear, a trigger member is provided at an end of the idler shaft, and a sensor is mounted in the housing at a disengaged position of the idler shaft, wherein when the idler gear is in the disengaged state, the trigger member actuates the sensor to shut down the electric motor. With this technical solution, when the idler clutch assembly is in the engaged state, the idler gear is positioned between the driving gear and the driven gear and meshes simultaneously with both. When the self-propelled apparatus is deenergized, the electric motor rotates in the reverse direction, causing the driving gear to rotate in the reverse direction; consequently, the idler gear also rotates in the reverse direction. Under the meshing action of the driven gear, the idler gear is driven to move reversely along the first guiding member. As the second guiding member engages with the toothed portion of the first guiding member, it slides under the action of the toothed portion into the disengaged position. Upon reaching the disengaged state, the trigger member mounted on the idler shaft actuates the sensor to shut down the electric motor. Cooperation between the trigger member and the sensor ensures that the idler shaft can reach the disengaged position precisely and reliably, guaranteeing that the idler shaft can drive the idler gear to disengage accurately from the driven gear. Simultaneously, the shutdown mechanism can also prevent prolonged reverse rotation of the electric motor, thereby minimizing wear between the first and second guiding members, reducing the risk of friction-induced damage, and further enhancing the operational reliability of the self-propelled apparatus.

In some embodiments, the sensor is a microswitch, the trigger member is fixed to an end of the idler shaft proximal to a cover plate, and when the idler gear is in a disengaged state, the trigger member abuts against and actuates the microswitch.

In some embodiments, the trigger member is fixed to the end of the idler shaft proximal to the cover plate; and wherein the sensor is a Hall-effect switch, and the trigger member is a magnet, when the idler gear is in the disengaged state, the sensor lies on an extension line of the idler shaft; or wherein the sensor is a photosensitive element and the trigger member is a light emitter, when the idler gear is in the disengaged state, the sensor lies within an illumination field of the light emitter.

In some embodiments, the housing has a receiving recess at one end and a cover plate configured to close the receiving recess, the first guiding member and the second guiding member being both disposed within the receiving recess, the sensor being fixedly mounted on the cover plate. With this technical solution, the receiving recess and the cover plate jointly enclose the first guiding member and the second guiding member, which minimizes ingress of foreign particles into the recess interior and thus prevents damage to the guiding members caused by the foreign particles, contributing to an extended service life of the first and second guiding members.

In some embodiments, the idler clutch assembly further comprises a slider rotatably mounted on the idler shaft, one end of the idler shaft extends into the receiving recess and is fixedly connected to the second guiding member, the housing defines a slide slot configured to guide sliding of the slider, and the slide slot has an arcuate profile with its center of curvature coincident with the axis of the driving gear.

The present disclosure further describes a lawn and garden implement, comprising a self-propelled apparatus according to any of the embodiments described *supra.*

Other features and advantages of the present disclosure will be described in detail through exemplary embodiments with reference to the accompanying drawings.

### BRIEF DESCRIPTION OF THE DRAWINGS

Hereinafter, the present disclosure will be further described with reference to the accompanying drawings, in which:
Fig. 1 is a structural schematic diagram of a self-propelled apparatus according to the present disclosure;
Fig. 2 is a sectional view of the self-propelled apparatus according to the present disclosure;
Fig. 3 is an exploded view of a differential mechanism in the self-propelled apparatus according to the present disclosure;
Fig. 4 is an exploded view of an axle shaft assembly and a wheel in the self-propelled apparatus according to the present disclosure;
Fig. 5 is an exploded view of an idler clutch assembly in the self-propelled apparatus according to the present disclosure;
Fig. 6 is a local enlarged view of part A in Fig. 5;
Fig. 7 is a schematic view of an idler gear in a disengaged state in the self-propelled apparatus according to the present disclosure;
Fig. 8 is a schematic view of the idler gear in an engaged state in the self-propelled apparatus according to the present disclosure;
Fig. 9 is a structural schematic view of a lawn and garden implement according to the present disclosure.

Reference Numerals:
1. housing; 11. slide slot; 12. receiving recess; 121. stop block; 13. cover plate; 21. electric motor; 22. driving gear; 23. control board; 24. battery pack; 3. idler clutch assembly; 31. idler shaft; 32. idler gear; 33. second guiding member; 34. slider; 35. first guiding member; 351. pivot end; 352. elastic member; 353. toothed portion; 3531. disengagement segment; 3532. transition segment; 354. clearance recess; 361. trigger member; 362. sensor; 4. driven gear; 41. differential mechanism; 411. differential right gear; 412. differential left gear; 413. positioning sleeve; 414. differential planetary gear; 5. axle shaft assembly; 51. right axle shaft; 52. left axle shaft; 53. intermediate shaft; 55. cylindrical pin; 56. ratchet wheel; 561. ratchet tooth; 6. wheel; 61. caster wheel.

### DETAILED DESCRIPTION OF EMBODIMENTS

Hereinafter, the technical solutions of the disclosure will be explained and illustrated through embodiments with reference to the accompanying drawings. However, the embodiments described herein are only preferred embodiments of the disclosure, not all of them. Other embodiments derived by those skilled in the art based on the examples in the embodiments without exercise of inventive work all fall within the protection scope of the disclosure.

In the description of the disclosure, it would be understood that the orientational or positional relationships indicated by the terms "center," "longitudinal," "transverse," "length," "width," "thickness", "upper," "lower," "front," "rear," "left," "right," "vertical," "horizontal," "top," "bottom," "inner," "clockwise," "counterclockwise," etc. are orientational and positional relationships based on the drawings, which are intended only for facilitating description of the disclosure and simplifying relevant illustrations, not for indicating or implying that the devices or elements compulsorily possess those specific orientations and are compulsorily configured and operated with those specific orientations; therefore, such terms should not be construed as limitations to the disclosure.

In the disclosure, unless otherwise explicitly provided and limited, the terms such as "mount," "connect," "couple," and "fix" should be understood broadly, which, for example, may refer to a fixed connection, a detachable connection, or an integral connection; which may be a mechanical connection or an electrical connection; which may be a direct connection or an indirect connection via an intermediate medium; which may also be a communication between the insides of two elements. To a person of normal skill in the art, specific meanings of the above terms in the disclosure may be construed based on specific situations.

### First Embodiment

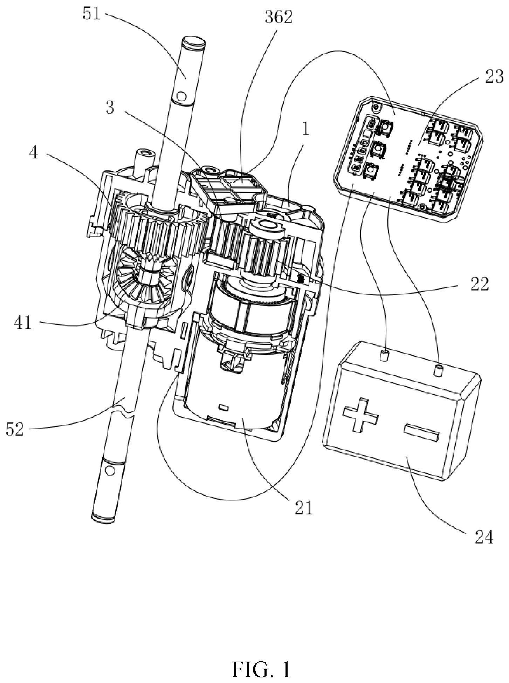

As illustrated in Figs. 1 to 4, this embodiment describes a self-propelled apparatus comprising a housing 1; an electric motor 21, and a transmission mechanism driven by the electric motor 21, the electric motor 21 and the transmission mechanism being disposed in the housing 1, the transmission mechanism comprising a driving gear 22, a driven gear 4, and an idler clutch assembly 3, the idler clutch assembly 3 being in mesh with the driving gear 22 and movable to engage with the driven gear 4; a guiding mechanism; and a differential mechanism 41; the guiding mechanism comprises a first guiding member 35 mounted on the housing 1 and a second guiding member 33 mounted on the idler clutch assembly 3; the second guiding member 33 rotates synchronously with the idler clutch assembly 3 and is configured to move along the first guiding member 35, thereby facilitating engagement and disengagement of the idler clutch assembly 3 with the driven gear 4; and the differential mechanism 41 comprises a left axle shaft 52, a right axle shaft 51, and a positioning sleeve 413, the left axle shaft 52 and the right axle shaft 51 being coaxially aligned, the positioning sleeve 413 being locked onto the driven gear 4, the driven gear 4 being mounted on the right axle shaft 51, the right axle shaft 51 further having a differential right gear 411, the left axle shaft 52 further having a differential left gear 412, the positioning sleeve 413 being configured to support and align the right axle shaft 51 and the left axle shaft 52, two differential planetary gears 414 being rotatably disposed within the positioning sleeve 413 and each of the differential planetary gears 414 simultaneously meshing with both the differential left gear 412 and the differential right gear 411.

In this embodiment, the differential mechanism 41 comprises the left axle shaft 52, the right axle shaft 51, and the positioning sleeve 413; the differential left gear 412 is provided on the left axle shaft 52, and the differential right gear 411 is provided on the right axle shaft 51; the positioning sleeve 413 rotates synchronously with the driven gear 4; two differential planetary gears 414 are disposed within the positioning sleeve 413, each of the differential planetary gears 414 simultaneously meshes with both the differential left gear 412 and the differential right gear 411; when the idler clutch assembly 3 meshes with the driven gear 4, the idler clutch assembly 3 transmits power to the driven gear 4, causing the driven gear 4 to rotate to drive rotation of the positioning sleeve 413; as the positioning sleeve 413 rotates, the two differential planetary gears 414 drive the differential left gear 412 and the differential right gear 411 to rotate, thereby enabling rotation of the left axle shaft 52 and the right axle shaft 51. When the implement moves linearly forward, the forces acting on both left and right axle shafts 51, 52 are equal; the differential left gear 412 and the differential right gear 411 rotate together with the positioning sleeve 413 but do not rotate about their own axes; consequently, the differential left gear 412, the differential right gear 411, and the differential planetary gears 414 rotate at a same speed as the driven gear 4, transmitting power to the left axle shaft 52 and the right axle shaft 51, causing the left and right axle shafts 51, 52 to rotate synchronously at the same speed. When the implement turns, the angular velocities and resistances of the left and right axle shafts 51, 52 differ, where the resistance of the axle shaft on the inner side (i.e., whichever of the left axle shaft 52 or right axle shaft 51 is positioned on the inner side of the turn) is greater than that of the axle shaft on the outer side (i.e., whichever of the left axle shaft 52 or right axle shaft 51 is positioned on the outer side of the turn); now, the differential planetary gears 414 not only rotate with the driven gear 4 and the positioning sleeve 413 but also rotate about their own axes; for example, when the implement turns left, power from the differential left gear 412 at the inner side is distributed to the outer differential right gear 411 via rotation of the differential planetary gears 414 about their own axes; the differential planetary gears 414 drive the differential right gear 411 on the outer side to rotate at a higher speed than the differential left gear 412 on the inner side, resulting in the rotational speed of the right axle shaft 51 being greater than that of the left axle shaft 52, thereby achieving differential travel. The differential mechanism 41 effectively avoids slippage and accelerated wear of the wheel driven by the draft shaft on the inner side during turning while significantly enhancing user experience.

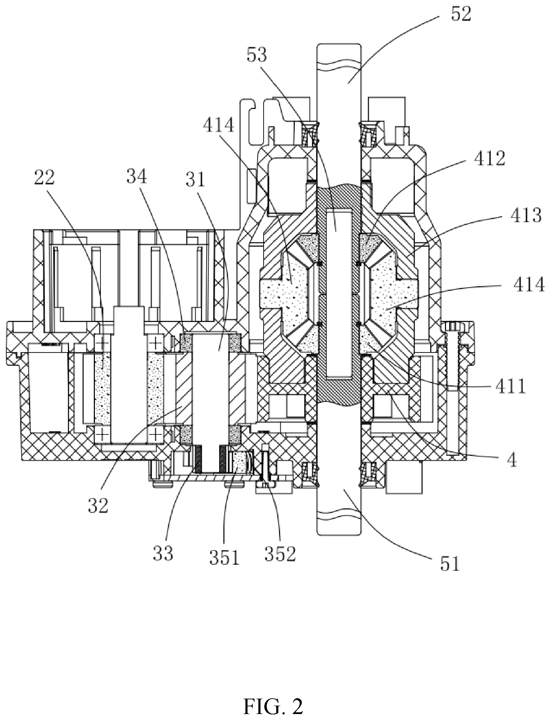

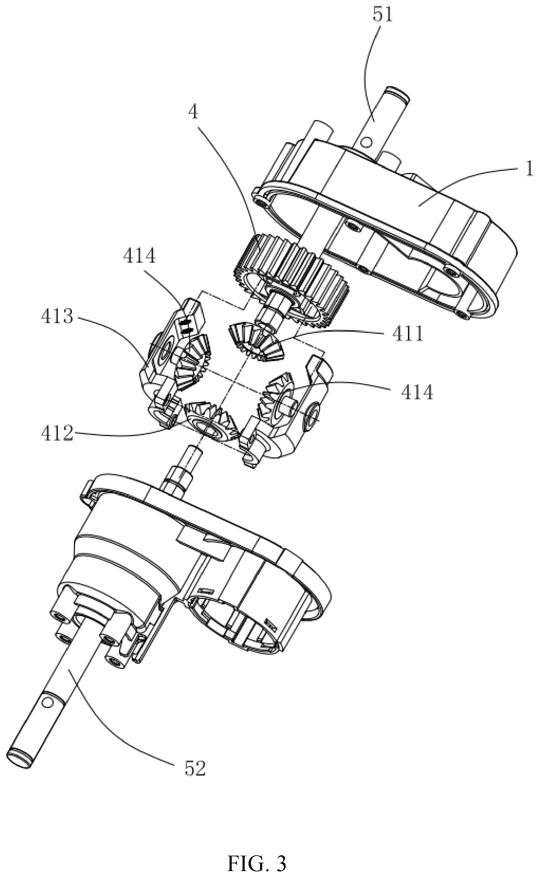

As illustrated in Figs. 2 and 3, in this embodiment, the differential mechanism 41 comprises an axle shaft assembly 5 comprising the left axle shaft 52, the right axle shaft 51, and an intermediate shaft 53 disposed between the left axle shaft 52 and the right axle shaft 51; opposing ends of the left axle shaft 52 and the right axle shaft 51 are each provided with a mounting slot for receiving the intermediate shaft 53; the left axle shaft 52 and the right axle shaft 51 are coaxially aligned about the intermediate shaft 53, i.e., both rotate about the intermediate shaft 53; additionally, the left axle shaft 52 and the right axle shaft 51 are rotatable relative to the intermediate shaft 53, enabling relative rotation between the left axle shaft 52 and the right axle shaft 51; the differential left gear 412 and the differential right gear 411 are respectively fixedly mounted on the opposing ends of the left axle shaft 52 and the right axle shaft 51 and are both disposed within the positioning sleeve 413; the positioning sleeve 413 is fitted over and rotatable about both the left axle shaft 52 and the right axle shaft 51; two differential planetary gears 414 are rotatably disposed inside the positioning sleeve 413; the differential planetary gears 414, the differential left gear 412, and the differential right gear 411 are all bevel gears, and the two differential planetary gears 414 simultaneously maintain meshing with both the differential left gear 412 and the differential right gear 411. When the idler clutch assembly 3 meshes with the driven gear 4, the idler clutch assembly 3 transmits power to the driven gear 4, causing the driven gear 4 to rotate to drive rotation of the positioning sleeve 413; as the positioning sleeve 413 rotates, the two differential planetary gears 414 drive the differential left gear 412 and the differential right gear 411 to rotate, thereby enabling rotation of the left axle shaft 52 and the right axle shaft 51.

When the implement moves linearly forward, the forces acting on both left and right axle shafts 51, 52 are equal; the differential planetary gears 414 rotate together with the positioning sleeve 413 and the driven gear 4 but do not rotate about their own axes; consequently, the differential left gear 412, the differential right gear 411, and the differential planetary gears 414 rotate at a same speed as the driven gear 4; torque is transmitted to the differential left gear 412 and the differential right gear 411, driving the left axle shaft 52 and the right axle shaft 51 to rotate at the same speed.

When the implement turns, the turning radius of the wheel driven by the axle shaft on the inner side (whichever of the left axle shaft 52 or right axle shaft 51 is positioned on the inner side of the turn) is smaller than that of the wheel driven by the axle shaft on the outer side (whichever of the left axle shaft 52 or right axle shaft 51 is positioned on the outer side of the turn); therefore, the resistance of the axle shaft assembly on the inner side is greater than that of the wheel 6 driven by the axle shaft on the outer side; consequently, the differential planetary gears 414 not only rotate with the driven gear 4 and the positioning sleeve 413 but also rotate about their own axes. For example, when the implement turns left, power from the differential left gear 412 on the inner side is applied to the differential right gear 411 on the outer side via rotation of the differential planetary gears 414 about their own axes, such that the differential planetary gears 414 drive the differential right gear 411 on the outer side to rotate at a higher speed than the differential left gear 412 on the inner side, resulting in the rotational speed of the right axle shaft 51 being greater than that of the left axle shaft 52, thereby achieving differential travel.

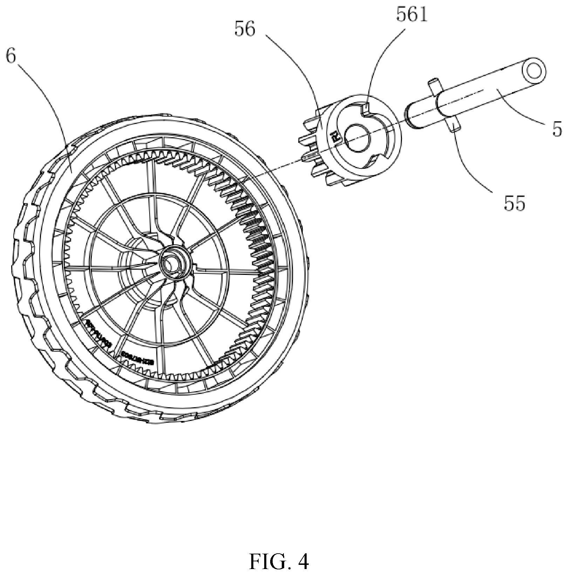

As illustrated in Fig. 4, the self-propelled apparatus according to this embodiment further comprises two wheels 6, the two wheels 6 being respectively connected to the left axle shaft 52 and the right axle shaft 51 via ratchet wheels 56; an internal spline is formed on the inner periphery of each wheel 6; each ratchet wheel 56 meshes with the internal spline of the corresponding wheel 6; ratchet teeth 561 are provided on the side of each ratchet wheel 56 facing the axle shaft assembly 5; a cylindrical pin 55 is provided on the outer periphery of the axle shaft assembly 5; the cylindrical pin 55 engages with the ratchet teeth 561 to enable unidirectional torque transmission, i.e., the axle shaft assembly 5 can only drive the ratchet wheel 56 to rotate in one direction; when the axle shaft assembly 5 rotates in the opposite direction, the ratchet wheel 56 and the axle shaft assembly 5 rotate relative to each other, thereby blocking reverse transmission. When the forward speed of the implement exceeds the motor-driven forward speed under external force (e.g., during downhill travel or turning), although the ratchet wheel 56 and the axle shaft assembly 5 rotate in a same direction, the rotational speed of the ratchet wheel 56 is greater than that of the axle shaft assembly 5; consequently, the axle shaft assembly 5 rotates relative to the ratchet wheel 56 in the opposite direction, such that the ratchet wheel 56 and the axle shaft assembly 5 rotate relative to each other to block torque transmission, thereby preventing reverse input of force to the electric motor 21; while when the external force ceases, the rotational speed of the ratchet wheel 56 decreases until one end of the cylindrical pin 55 re-engages with the ratchet teeth 561, driving the ratchet wheel 56 to rotate again to restore normal output.

### Second Embodiment

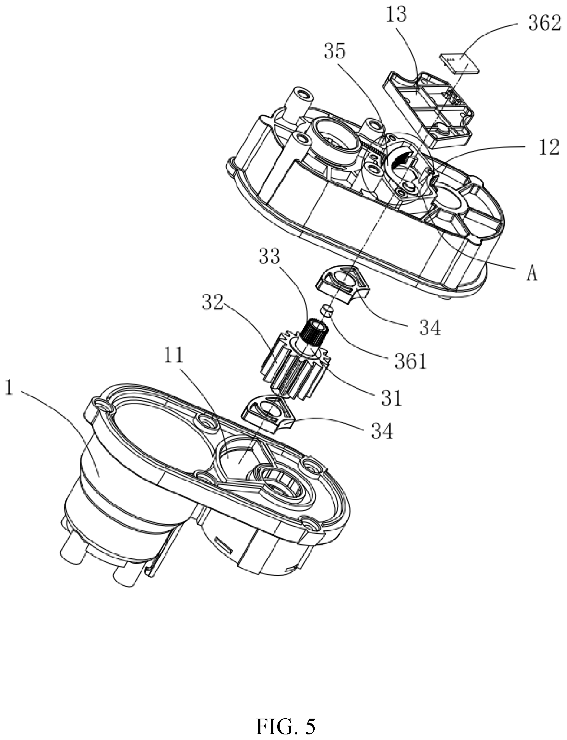

As illustrated in Figs. 5 to 8, a self-propelled apparatus according to this embodiment comprises a housing 1, a guiding mechanism, an electric motor 21 disposed in the housing 1, and a transmission mechanism driven by the electric motor 21, the transmission mechanism comprising a driving gear 22, a driven gear 4, and an idler clutch assembly 3; the idler clutch assembly 3 being in mesh with the driving gear 22 and movable to engage with the driven gear 4; the guiding mechanism comprises a first guiding member 35 mounted on the housing 1 and a second guiding member 33 mounted on the idler clutch assembly 3, the second guiding member 33 rotating synchronously with the idler clutch assembly 3 and being configured to move along the first guiding member 35, thereby facilitating engagement and disengagement of the idler clutch assembly 3 with the driven gear 4; the idler clutch assembly 3 comprising an idler gear 32, an idler shaft 31, and a slider 34 fixedly connected to each other, an output shaft of the electric motor 21 being rotatably connected to the driving gear 22, the driving gear 22 remaining meshed with the idler gear 32; as the driving gear 22 rotates, the idler gear 32 is driven to rotate; the idler shaft 31 passes through both the idler gear 32 and the slider 34; the idler shaft 31 and the idler gear 32 are joined by an interference fit to achieve synchronous rotation, while the slider 34 is rotatably coupled with the idler shaft 31; as the idler gear 32 rotates with the driving gear 22, the idler shaft 31 drives the slider 34 to slide along a slide slot 11; the idler gear 32 is in the engaged state when the slider 34 reaches one end of the slide slot 11, while in the disengaged state when the slider 34 reaches the opposite end of the slide slot 11. In the engaged state, the idler gear 32 meshes simultaneously with both the driving gear 22 and the driven gear 4, enabling torque transmission from the driving gear 22 to the driven gear 4. In the disengaged state, the idler gear 32 separates from the driven gear 4, interrupting torque transmission between the driving gear 22 and the driven gear 4.

Additionally, in this embodiment, the first guiding member 35 is rotatably connected to the housing 1 and has a tendency to rotate toward the idler shaft 31. A toothed portion 353 is provided on the side of the first guiding member 35 facing the idler shaft 31. The idler gear 32 in the disengaged state meshes only with the driving gear 22 and remains separated from the driven gear 4. The second guiding member 33 at the end of the idler shaft 31 remains meshed with the toothed portion 353 of the first guiding member 35. Upon activation of the electric motor 21, the driving gear 22 drives the idler gear 32 to rotate, while the second guiding member 33 and the idler shaft 31 rotate synchronously with the idler gear 32. Under the meshing action of the toothed portion 353, the second guiding member 33 drives the idler shaft 31 to slide along the second guiding member 33 toward the engaged position, thereby driving the entire idler clutch assembly 3 to slide toward the other end of the slide slot 11. Cooperation between the toothed portion 353 of the first guiding member 35 and the second guiding member 33 of the idler shaft 31 effectively increases the interaction force therebetween, facilitating overcoming resistance during sliding of the idler shaft 31, ensuring smooth sliding of the idler clutch assembly 3, and thereby enhancing reliability of the idler clutch assembly 3.

When the idler gear 32 is in the engaged state, it meshes with the driving gear 22 on one side and with the driven gear 4 on the opposite side. The central axes of the idler gear 32, the driving gear 22, and the driven gear 4 are collinear, enabling smooth and reliable torque transmission; now, the second guiding member 33 is disengaged from the first guiding member 35, preventing the first guiding member 35 from interfering with rotation of the second guiding member 33, minimizing contact-induced wear between the first guiding member 35 and the second guiding member 33. Additionally, this prevents the first guiding member 35 from imposing resistance on rotation of the idler gear 32, minimizing torque loss during torque transmission and improving transmission efficiency.

In this embodiment, a trigger member 361 is provided on one end of the idler shaft 31, and a sensor 362 is provided in the housing 1. The sensor 362 is positioned corresponding to the disengaged position of the idler shaft 31. When the self-propelled apparatus is deactivated, the electric motor 21 automatically reverses rotation. Under the meshing action of the driven gear 4, the idler gear 32 is driven to slide in the reverse direction. After the second guiding member 33 meshes with the toothed portion 353, it slides to the disengaged position under the action of the toothed portion 353. When the idler gear 32 is in the disengaged state, the trigger member 361 on the idler shaft 31 triggers the sensor 362, thereby shutting down the electric motor 21. Cooperation between the trigger member 361 and the sensor 362 ensures that the idler shaft 31 reaches the disengaged position precisely and reliably, guaranteeing that the idler gear 32 fully disengages from the driven gear 4. This also prevents prolonged reverse rotation of the electric motor 21, reducing the contact-induced wear between the first guiding member 35 and the second guiding member 33, thereby enhancing reliability of the self-propelled apparatus.

As illustrated in Fig. 5, the housing 1 defines a slide slot 11. The slide slot 11 has an arcuate profile with its center of curvature coincident with the axis of the driving gear 22, while the structure of the slider 34 is adapted to that of the slide slot 11. During sliding of the slider 34 along the slide slot 11, the slider 34 rotates about the central axis of the driving gear 22; that is, the motion trajectory of the slider 34 is arcuate and concentric with the central axis of the driving gear 22. The angle α between the engaged position and the disengaged position of the slider 34 satisfies 35° ≤ α ≤ 40° , ensuring that the idler gear 32 stably disengages from the driven gear 4 while minimizing the space occupied by sliding of the idler clutch assembly 3, thereby reducing the overall size of the self-propelled apparatus. If α < 35° , the rotation angle of the idler gear 32 about the driving gear 22 is insufficient, potentially causing the idler gear 32 to remain in contact with the driven gear 4 in the disengaged position, risking collision and damage. If α > 40°, the rotation angle increases, resulting in a longer slide slot 11 that occupies more space, enlarging the housing 1. Additionally, an increased sliding distance of the slider 34 raises the probability of clutch malfunction and reduces reliability of the idler clutch assembly 3.

As illustrated in Fig. 5, in this embodiment, the idler clutch assembly 3 comprises two sliders 34, the idler shaft 31 passing through the idler gear 32 and both sliders 34. The idler shaft 31 and the idler gear 32 are fixedly fitted to enable synchronous rotation. The two sliders 34 are positioned on opposite sides of the idler gear 32 and are rotatably coupled with the idler shaft 31, allowing the idler shaft 31 to rotate relative to the sliders 34 without interference. Provision of two sliders 34 ensures more uniform force distribution on the idler shaft 31, preventing tilting and ensuring smooth, reliable sliding of the entire idler clutch assembly 3. Additionally, the second guiding member 33 is fixedly mounted on one end of the idler shaft 31 to rotate synchronously therewith. It is understood that in other embodiments, the second guiding member 33 may be integrally formed with the idler shaft 31, i.e., the second guiding member 33 constitutes an integral surface feature of the idler shaft 31.

As illustrated in Figs. 1 and 5, in this embodiment, the sensor 362 is a non-contact switch, specifically, a Hall-effect switch, and the trigger member 361 is a magnet embedded inside one end of the idler shaft 31. When the magnet approaches, the Hall-effect switch is triggered. The housing 1 further houses a battery pack 24 and a control board 23. The control board 23 controls the battery pack 24 to supply power to the electric motor 21. The Hall-effect switch is electrically connected to the control board 23. When the idler shaft 31 is in the disengaged position, the Hall-effect switch is disposed on the extension line of the idler shaft 31, minimizing the distance between the magnet and the Hall-effect switch to trigger the switch. The Hall-effect switch transmits a signal to the control board 23, and the control board 23 responsively deenergize the electric motor 21, ensuring prompt shutdown after the idler clutch assembly 3 reaches the disengaged position, enhancing positional accuracy of the sliding idler clutch assembly 3, while avoiding prolonged ineffective operation of the electric motor 21 to reduce energy consumption.

It is understood that in other embodiments, the sensor 362 may be a photosensitive element and the trigger member 361 a light emitter; in the disengaged state, the sensor 362 lies within illumination of the light emitter.

It is understood that in an alternative embodiment, the sensor 362 may be a contact switch, specifically, a microswitch; the trigger member 361 is fixed to the end of the idler shaft 31 proximal to the cover plate 13, or the idler shaft 31 itself may serve as the trigger member 361, contacting the sensor 362 in the disengaged state.

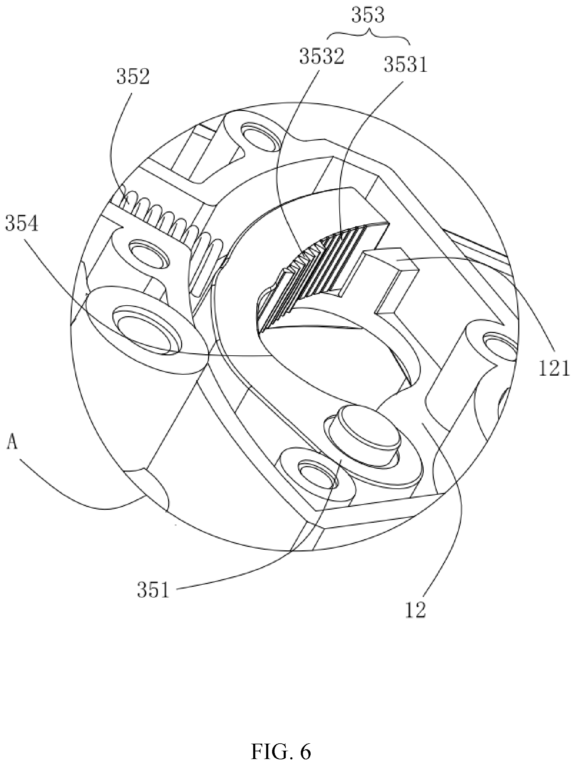

As illustrated in Fig. 6, in this embodiment, the housing 1 defines a receiving recess 12 on a rear surface of the housing 1 corresponding to the slide slot 11. One end of the idler shaft 31 passes through the slide slot 11 and extends into the receiving recess 12, with the second guiding member 33 at one end of the idler shaft 31 disposed within the receiving recess 12. The first guiding member 35 comprises a pivot end 351 pivotally connected to the housing 1 and a free end distal thereto. The first guiding member 35 is pivotally mounted within the receiving recess 12 via the pivot end 351. The toothed portion 353 is provided on the surface of the free end facing the idler shaft 31. An elastic member 352, which is a compression spring, is disposed on the side of the first guiding member 35 opposite to the second guiding member 33. One end of the elastic member 352 abuts a sidewall of the receiving recess 12, and the other end urges the side of the first guiding member 35 facing away from the idler shaft 31, biasing the first guiding member 35 toward the idler shaft 31. To limit the rotation angle of the first guiding member 35, a stop block 121 is provided within the receiving recess 12, abutting against the free end of the first guiding member 35 to restrict further rotation of the first guiding member 35 toward the idler shaft 31. The elastic member 352 biases the first guiding member 35 into abutment with the stop block 121.

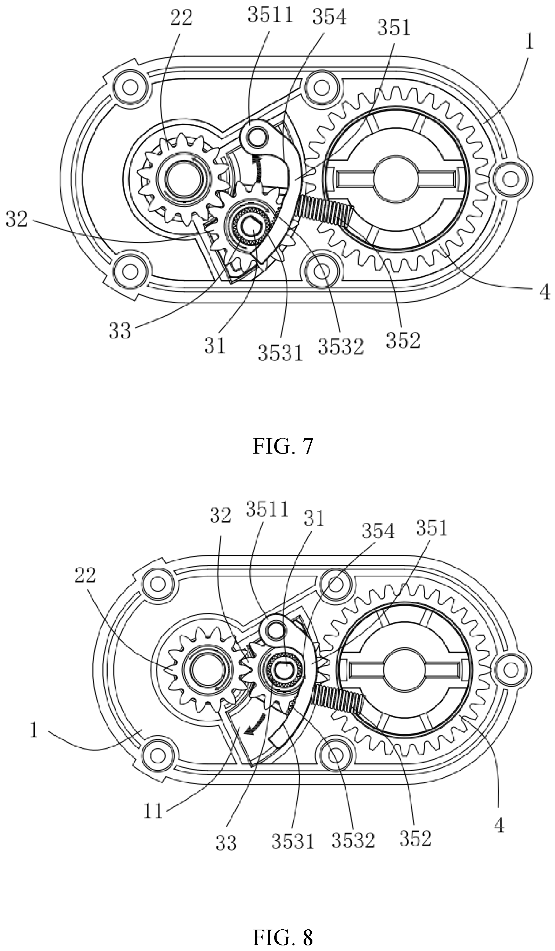

As illustrated in Fig. 7, the idler shaft 31 is in the disengaged state; upon activation of the electric motor 21, the driving gear 22 is driven to rotate counterclockwise, driving the idler gear 32 to rotate clockwise. The second guiding member 33 rotates synchronously with the idler gear 32. Since the second guiding member 33 is engaged the toothed portion 353 of the first guiding member 35, the second guiding member 33 drives the idler shaft 31 to slide along the toothed portion 353, i.e., along the slide slot 11, until the idler shaft 31 reaches the engaged position, where the idler gear 32 meshes simultaneously with both the driving gear 22 and the driven gear 4, thereby enabling torque transmission (see Fig. 8).

As shown in Fig. 8, upon deactivation of the self-propelled apparatus, the output shaft of the electric motor 21 rotates in the reverse direction, driving the driving gear 22 to rotate clockwise, which in turn drives the idler gear 32 to rotate counterclockwise. The second guiding member 33 rotates synchronously with the idler gear 32. Under the meshing action of the driven gear 4, the idler shaft 31 is driven to slide in the reverse direction until the idler shaft 31 reaches the disengaged position, separating the idler gear 32 from the driven gear 4 to interrupt torque transmission (see Fig. 7). Additionally, when the idler shaft 31 reaches the disengaged position, the trigger member 361 on the idler shaft 31 triggers the sensor 362, which in turn transmits a signal to the control board 23 to deenergize the electric motor 21. This ensures precise and reliable positioning of the idler shaft 31, prevents prolonged reverse rotation of the electric motor 21, reduces the risk of motor damage, and enhances overall reliability of the self-propelled apparatus.

As illustrated in Fig. 6, in this embodiment, the toothed portion 353 comprises a transition segment 3532 and a disengagement segment 3531 arranged continuously. The protrusion height of the tooth feature on the disengagement segment 3531 is less than that on the transition segment 3532. As the idler shaft 31 slides from the engaged position to the disengaged position, the reduced protrusion height on the disengagement segment 3531 decreases the force exerted on the second guiding member 33. During rotation of the second guiding member 33, it pushes the first guiding member 35 to rotate away from the idler shaft 31, enabling separation between the second guiding member 33 and the toothed portion 353, thereby avoiding jamming and preventing damage to the electric motor 21 due to excessive load. Although the protrusion height on the disengagement segment 3531 is shorter, the tooth feature remains capable of engaging with the second guiding member 33 to provide force sufficient for movement toward the engaged position, overcoming sliding resistance of the idler clutch assembly 3, ensuring smooth operation, and enhancing reliability.

As illustrated in Fig. 6, a clearance recess 354 is defined on the side of the first guiding member 35 facing the idler shaft 31. In the engaged state, the outer periphery of the second guiding member 33 is in clearance fit with the clearance recess 354, maintaining a non-contact state between the first guiding member 35 and the second guiding member 33 to eliminate wear risk.

In this embodiment, the idler clutch assembly 3 further supports manual disengagement. If the electric motor malfunctions or the battery pack is removed, preventing disengagement of the idler clutch assembly from the driven gear, the user may pull the lawn and garden implement backward to rotate the wheels 6 in the reverse direction, driving accelerated rotation of the driven gear 4. Upon stopping the implement, the idler clutch assembly moves toward the disengaged position under reverse inertial force, thereby achieving manual disengagement.

### Third Embodiment

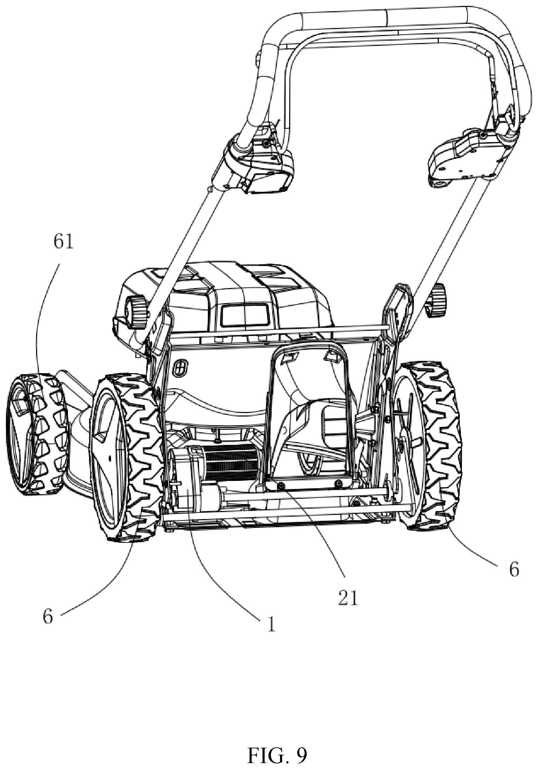

As illustrated in Fig. 9, this embodiment describes a lawn and garden implement. The lawn and garden implement comprises a main body, a self-propelled apparatus configured to drive the main body forward, and caster wheels 61 configured to facilitate turning of the main body. The self-propelled apparatus comprises an electric motor 21, a transmission mechanism driven by the electric motor 21, a guiding mechanism, and a differential mechanism 41, and is implemented in accordance with the self-propelled apparatus described in the first embodiment above. The differential mechanism 41 comprises two axle shaft assemblies 5 and wheels 6 respectively connected to the two axle shaft assemblies 5. The main body is connected to two caster wheels 61, which are respectively disposed on opposite sides of the main body. A caster mechanism is provided between each caster wheel 61 and the main body. During turning of the lawn and garden implement, the two wheels 6 generate a speed differential under the action of the differential mechanism 41. The rotational speeds of the two wheels 6 are proportional to their respective turning radii. The two caster wheels 61 automatically turn under the action of the caster mechanisms. Through the combined action of the caster wheels 61 and the wheels 6, flexible and free turning is achieved, thereby enabling smoother turning of the lawn and garden implement and enhancing user experience.

What have been described supra are only exemplary embodiments of the present disclosure; however, the scope of protection of the present disclosure is not limited thereto; any person skilled in the art shall appreciate that the present disclosure includes, but is not limited to, the contents illustrated in the drawings and described in the exemplary embodiments. Any modifications without departing from the functions or structural principles of the present disclosure shall fall within the scope of the appended claims.

## Claims

1. A self-propelled apparatus, comprising
a housing (1);
an electric motor (21) and a transmission mechanism driven by the electric motor (21), the electric motor (21) and the transmission mechanism being disposed in the housing (1), the transmission mechanism comprising a driving gear (22), a driven gear (4), and an idler clutch assembly (3), the idler clutch assembly (3) being in mesh with the driving gear (22) and movable to engage with the driven gear (4);
**characterized in that** the self-propelled apparatus further comprises a guiding mechanism and a differential mechanism (41);
the guiding mechanism comprises a first guiding member (35) mounted on the housing (1) and a second guiding member (33) mounted on the idler clutch assembly (3), the second guiding member (33) rotating synchronously with the idler clutch assembly (3) and being configured to move along the first guiding member (35) to facilitate engagement and disengagement of the idler clutch assembly (3) with the driven gear (4),
and the differential mechanism (41) comprises a left axle shaft (52), a right axle shaft (51), and a positioning sleeve (413), the left axle shaft (52) and the right axle shaft (51) being coaxially aligned, the positioning sleeve (413) being locked onto the driven gear (4), the driven gear (4) being mounted on the right axle shaft (51), a differential right gear (411) being further mounted on the right axle shaft (51), a differential left gear (412) being mounted on the left axle shaft (52), the positioning sleeve (413) being configured to support and align the right axle shaft (51) and the left axle shaft (52), two differential planetary gears (414) being rotatably disposed within the positioning sleeve (413) and respectively meshing with both the differential left gear (412) and the differential right gear (411).

2. The self-propelled apparatus of claim 1, **characterized in that** the first guiding member (35) has a curved configuration and comprises a toothed portion (353) on one side thereof, the toothed portion (353) being in meshing engagement with the second guiding member (33).

3. The self-propelled apparatus of claim 2, **characterized in that** the first guiding member (35) is rotatably mounted on an inner side of the housing (1), and an elastic member (352) is disposed in the housing (1) on a side of the first guiding member (35) facing away from the second guiding member (33), the elastic member (352) being configured to bias the first guiding member (35) toward the second guiding member (33).

4. The self-propelled apparatus of claim 3, **characterized in that** the first guiding member (35) comprises a pivot end (351) pivoted to the housing (1) and a free end distal from the pivot end (351), a stop block (121) is provided in the housing (1) to limit a rotation angle of the first guiding member (35), and the elastic member (352) biases the first guiding member (35) such that the free end of the first guiding member (35) abuts against the stop block (121).

5. The self-propelled apparatus of claim 4, **characterized in that** the toothed portion (353) of the first guiding member (35) comprises a transition segment (3532) and a disengagement segment (3531) arranged continuously, a tooth protrusion height of the disengagement segment (3531) being less than that of the transition segment (3532), the disengagement segment (3531) being positioned proximal to the free end, and during engagement or disengagement of the idler clutch assembly (3) with the driven gear (4), the second guiding member (33) contacts the disengagement segment (3531) while traversing the transition segment (3532) of the toothed portion (353) toward the free end or the pivot end (351), respectively.

6. The self-propelled apparatus of claim 3, **characterized in that** a clearance recess (354) is provided on a side of the first guiding member (35) facing the second guiding member (33), and when the idler clutch assembly (3) is engaged with the driven gear (4), a clearance is maintained between the second guiding member (33) and the clearance recess (354).

7. The self-propelled apparatus of claim 1, **characterized in that** an intermediate shaft (53) is provided between the left axle shaft (52) and the right axle shaft (51), the left axle shaft (52) and the right axle shaft (51) being connected via the intermediate shaft (53) to position the left axle shaft (52) and the right axle shaft (51) in coaxial alignment.

8. The self-propelled apparatus of claim 1, **characterized in that** the left axle shaft (52) and the right axle shaft (51) are each connected to a wheel (6), a cylindrical pin (55) is provided on each of the left axle shaft (52) and the right axle shaft (51), each wheel (6) is provided with a ratchet wheel (56) having ratchet teeth (561), and each cylindrical pin (55) drivingly engages with the corresponding ratchet teeth (561) to effect unidirectional drive.

9. The self-propelled apparatus of claim 1, **characterized in that** the left axle shaft (52) and the right axle shaft (51) are each drivingly coupled to a respective wheel (6) via a respective overrunning clutch to effect unidirectional torque transmission.

10. A self-propelled apparatus, comprising:
a housing (1);
an electric motor (21) disposed in the housing (1);
a transmission mechanism driven by the electric motor (21) and disposed in the housing (1), the transmission mechanism comprising a driving gear (22), a driven gear (4), and an idler clutch assembly (3), the idler clutch assembly (3) being in mesh with the driving gear (22) and movable to engage with the driven gear (4);
**characterized in that** the self-propelled apparatus further comprises a guiding mechanism;
wherein the guiding mechanism comprises a first guiding member (35) mounted on the housing (1) and a second guiding member (33) mounted on the idler clutch assembly (3), the second guiding member (33) rotating synchronously with the idler clutch assembly (3) and being configured to travel along the first guiding member (35) to facilitate engagement and disengagement of the idler clutch assembly (3) with the driven gear (4),
and the idler clutch assembly (3) comprises an idler gear (32) and an idler shaft (31) fixedly connected to each other, the idler gear (32) being configured to assume an engaged state in which it meshes with the driven gear (4) and a disengaged state in which it is separated from the driven gear (4), a trigger member (361) is provided at an end of the idler shaft (31), and a sensor (362) is mounted in the housing (1) at a disengaged position of the idler shaft (31), wherein when the idler gear (32) is in the disengaged state, the trigger member (361) actuates the sensor (362) to shut down the electric motor (21).

11. The self-propelled apparatus of claim 10, **characterized in that** the sensor (362) is a microswitch, the trigger member (361) is fixed to an end of the idler shaft (31) proximal to a cover plate (13), and when the idler gear (32) is in a disengaged state, the trigger member (361) abuts against and actuates the microswitch.

12. The self-propelled apparatus of claim 10, **characterized in that** the trigger member (361) is fixed to the end of the idler shaft (31) proximal to the cover plate (13); and
wherein the sensor (362) is a Hall-effect switch, and the trigger member (361) is a magnet, and when the idler gear (32) is in the disengaged state, the sensor (362) lies on an extension line of the idler shaft (31); or
wherein the sensor (362) is a photosensitive element and the trigger member (361) is a light emitter, and when the idler gear (32) is in the disengaged state, the sensor (362) lies within an illumination field of the light emitter.

13. The self-propelled apparatus of claim 10, **characterized in that** the housing (1) defines a receiving recess (12) at one end and the cover plate (13) configured to close the receiving recess (12), the first guiding member (35) and the second guiding member (33) being both disposed within the receiving recess (12), the sensor (362) being fixedly mounted on the cover plate (13).

14. The self-propelled apparatus of claim 10, **characterized in that** the idler clutch assembly (3) further comprises a slider (34) rotatably mounted on the idler shaft (31), one end of the idler shaft (31) extends into the receiving recess (12) and is fixedly connected to the second guiding member (33), the housing (1) defines a slide slot (11) configured to guide sliding of the slider (34), and the slide slot (11) has an arcuate profile with its center of curvature coincident with the axis of the driving gear (22).

15. A lawn and garden implement, comprising the self-propelled apparatus of any one of claims 1 to 14.
